## Europäisches Patentamt
## European Patent Office
## Office européen des brevets

(11) Numéro de publication: **0 088 688**
**B1**

(12)

# FASCICULE DE BREVET EUROPEEN

(45) Date de publication du fascicule du brevet:
**30.04.86**

(51) Int. Cl.⁴: **G 01 L 1/22**

(21) Numéro de dépôt: **83400446.7**

(22) Date de dépôt: **04.03.83**

(54) **Dynamomètre à poutre de flexion.**

(30) Priorité: **09.03.82 FR 8203920**

(43) Date de publication de la demande:
**14.09.83 Bulletin 83/37**

(45) Mention de la délivrance du brevet:
**30.04.86 Bulletin 86/18**

(84) Etats contractants désignés:
**AT BE CH DE FR GB IT LI LU NL SE**

(56) Documents cités:
**EP - A - 0 029 776**
**EP - A - 0 035 942**
**CH - A - 304 064**
**FR - A - 1 156 671**
**FR - A - 1 542 997**
**FR - A - 2 439 395**
**US - A - 3 878 711**

(73) Titulaire: **TESTUT-AEQUITAS, 8, rue Popincourt,
F-75011 Paris (FR)**

(72) Inventeur: **Valadier, Jean-Claude, 124 Bd Blanqui,
F-75013 Paris (FR)**

(74) Mandataire: **Martin, Jean-Jacques et al, Cabinet
REGIMBEAU 26, Avenue Kléber, F-75116 Paris (FR)**

LIBER, STOCKHOLM 1986

## Description

La présente invention concerne un dynamomètre comportant un corps d'épreuve destiné à subir une déformation élastique lorsqu'une force lui est appliquée.

Elle concerne plus particulièrement un dynamomètre du type comportant un corps d'épreuve à poutre de flexion qui présente une extrémité encastrée et qui est déformable élastiquement en flexion sous l'effet d'une force appliquée à l'extrémité opposée de la poutre, ainsi que des moyens sensibles destinés à détecter la déformation de la poutre.

Dans les dynamomètres de ce type, appelés également dynamomètres de flexion, l'extrémité encastrée de la poutre de flexion, que l'on appelle également poutre cantilever, est fixée à un support, tandis que la charge est appliquée à l'extrémité opposée de la poutre en sorte que la poutre peut fléchir sous l'effet de la charge appliquée et retourner ensuite élastiquement à sa position de repos lorsque l'effet de la charge est supprimé.

Une des applications typiques des dynamomètres de flexion est la balance suspendue où la poutre est disposée à l'horizontale avec son extrémité encastrée fixée à un montant vertical et avec son extrémité opposée supportant un plateau porte-charge.

Les moyens sensibles utilisés dans les dynamomètres de flexion connus pour détecter la déformation de la poutre sont habituellement constitués par des jauges à trame pelliculaire dont l'un des inconvénients majeurs est de donner lieu à un fluage sous charge important.

Le document EP-A-0 035 942 concerne un dynamomètre dont le corps d'épreuve est constitué par un prisme ou un cylindre droit destiné à subir des efforts axiaux et à travailler soit à la traction, soit à la compression. Ce dynamomètre comporte un corps d'épreuve qui présente un axe longitudinal le long duquel se trouvent en série une première extrémité encastrée, une zone centrale et une deuxième extrémité dite l'extrémité opposée du corps, ledit corps étant déformable élastiquement sous l'effet d'une force appliquée à l'extrémité opposée, parallèlement à l'axe longitudinal, ainsi que des moyens sensibles destinés à détecter la déformation du corps et constitués par quatre séries d'enroulements de fil de jauge prétendu, des zones d'ancrage destinées à recevoir lesdites quatre séries d'enroulement étant définies dans la matière du corps, deux desdites séries d'enroulement ayant leurs brins principaux orientés sensiblement parallèlement à l'axe longitudinal du corps, tandis que les deux autres séries d'enroulements ont leurs brins principaux orientés sensiblement perpendiculairement à l'axe longitudinal du corps, lesdites quatre séries d'enroulements demeurant en contact intime avec le corps, formant un montage électrique en pont et étant connectées de façon que le pont se déséquilibre dès que la force est appliquée parallèlement à l'axe longitudinal du corps.

Le document CH-A-304 064 concerne un comparateur. Celui-ci comporte une poutre de flexion et une jauge associée formée de fils résistants collés sur la poutre.

Le document EP-A-0029 776 concerne un récepteur de charge à parallélegramme comportant des charières élastiques qui équilibrent le récepteur sous l'effet de la charge appliquée.

La présente invention a pour but d'éliminer l'inconvénient précité, c'est-à-dire le fluage sous charge, rencontré dans les dynamomètres de flexion classiques utilisant des jauges à trame pelliculaire en réalisant un dynamomètre de flexion dont les moyens sensibles utilisent un fil résistant bobiné sur le corps d'épreuve.

Le dynamomètre conforme à la présente invention, du type connu en soi comportant un corps d'épreuve qui possède un axe longitudinal le long duquel se trouvent en série une première extrémité encastrée, une zone centrale et une deuxième extrémité dite l'extrémité opposée du corps d'épreuve, ledit corps d'épreuve étant déformable élastiquement sous l'effet d'une force appliquée à l'extrémité opposée, ainsi que des moyens sensibles destinés à détecter la déformation du corps d'épreuve et constitués par quatre séries d'enroulements de fil de jauge prétendu, des zones d'ancrage destinées à recevoir lesdites quatre séries d'enroulements étant définies dans la matière du corps d'épreuve, deux desdites séries d'enroulements ayant leurs brins principaux orientés sensiblement parallèlement à l'axe longitudinal du corps d'épreuve, lesdites quatre séries d'enroulements demeurant en contact intime avec le corps d'épreuve, formant un montage électrique en pont et étant connectées de façon que le pont se déséquilibre lorsque ladite force est appliquée sur le corps d'épreuve,

est caractérisé par le fait que:

- le corps d'épreuve constitue une poutre dont la la zone centrale de la poutre comprend au moins une zone de flexion déformable élastiquement en flexion sous l'effet de la force orientée sensiblement perpendiculairement à l'axe longitudinal de la poutre,

- les deux autres séries d'enroulements ont aussi leurs brins principaux orientés sensiblement parallèlement à l'axe longitudinal de la poutre, deux des séries d'enroulements ayant leurs brins principaux disposés suivant les fibres tendues de la poutre, tandis que les deux autres séries d'enroulements ont leurs brins principaux disposés suivant les fibres comprimées de la poutre,

- et par le fait que le dynamomètre comprend des moyens pour fixer respectivement l'extrémité encastrée de la poutre et l'extrémité opposée de la poutre à deux bras opposés d'un parallélogramme déformable à charnières élastiques formant récepteur de charge.

Dans un mode de réalisation préféré de l'invention, la zone de flexion de la poutre présente une section décroissante depuis l'extrémité encastrée jusqu'à l'extrémité opposée.

Parmi les formes à section décroissante, la forme préférée est la forme tronconique, en raison notamment de sa grande facilité d'usinage. Toutefois, on peut utiliser d'autres formes à section décroissante, en particulier des formes tronconiques fraisées, des formes en tronc de pyramide à base rectangle ou carrée, ou losange, des formes à section elliptiques ou même des formes à section en I décroissantes.

La zone de flexion de la poutre peut également presenter une section constante, par exemple une section circulaire, elliptique, rectangulaire, carrée, en I, etc.

Dans le mode de réalisation préféré de l'invention, les zones d'ancrage sont des épaulements circulaires usinés dans la matière de la poutre, au moyen d'un trépan annulaire. Chacune des quatre séries d'enroulements prend ainsi appui sur deux zones d'ancrage définies dans la zone de flexion de la poutre, respectivement à proximité de l'extrémité encastrée et à proximité de l'extrémité opposée. Chaque zone d'ancrage peut servir à retenir une seule série d'enroulements, ou, le cas échéant, deux séries d'enroulements.

Bien que chaque série d'enroulements puisse comporter un seul enroulement, il est préférable que chacune d'elle comporte plusieurs séries d'enroulements et que le fil de jauge passe donc plusieurs fois autour d'une même zone d'ancrage. Ceci permet en effet soit d'obtenir des résistances de pont élevées avec les avantages bien connus que cela apporte: faible consommation et faible puissance à dissiper par le pont, soit de réduire la longueur fléchie de la poutre pour une résistance donnée, ce qui augmente la raideur du capteur, et simplifie la continuation.

La poutre de flexion du dynamomètre de l'invention doit être réalisée dans un matériau doué de propriétés élastiques, par exemple en un alliage léger, tel qu'un alliage d'aluminium. On préfère tout particulièrement utiliser un alliage léger anodisable car cela permet d'éviter les problèmes d'isolement électrique entre le fil résistant et la matière du corps d'épreuve.

L'extrémité encastrée de la poutre peut être encastrée dans un bras du parallélogramme tandis que l'extrémité opposée de la poutre est reliée par une liaison mécanique au bras opposé du parallélogramme. On peut également prévoir que l'extrémité encastrée et l'extrémité opposée de la poutre soient encastrées respectivement dans deux bras opposés du parallélogramme et que la poutre comporte un amincissement, jouant le rôle d'articulation élastique, disposée entre la zone de flexion et l'extrémité opposée de la poutre.

Pour les balances à récepteur de charge, on pourra prévoir que la poutre de flexion comporte deux zones de flexion, chaque zone de flexion recevant une série d'enroulements dont les brins principaux sont disposés suivant les fibres tendues de la poutre et une série d'enroulementsdont les brins principaux sont disposés suivant les fibres comprimées de la poutre.

D'autres caractéristiques et avantages de l'invention seront mieux compris à la lecture de la description détaillée qui va suivre et qui se réfère aux dessins annexés, sur lesquels:

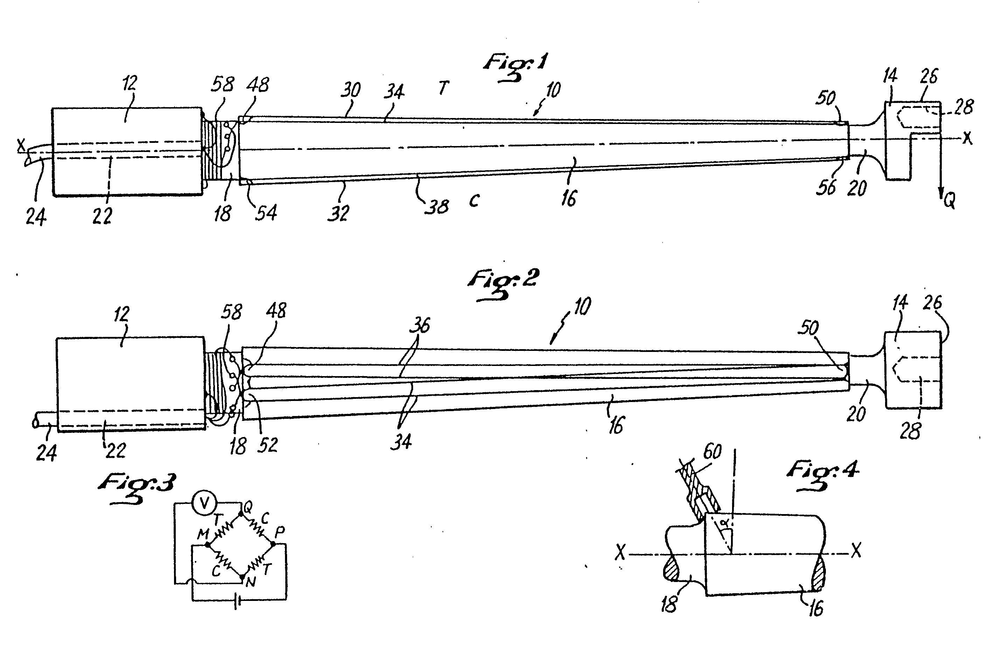

. la figure 1 est une vue en élévation d'un dynamomètre à poutre de flexion tronconique;

. la figure 2 est une vue de dessus du dynamomètre de la figure 1;

. la figure 3 représente le montage électrique en pont des quatre séries d'enroulements du dynamomètre des figures 1 et 2;

. la figure 4 montre l'usinage d'une zone d'ancrage au moyen d'un trépan annulaire;

. la figure 5 est une vue en élévation montrant la forme générale d'un dynamomètre à poutre de flexion à section décroissante;

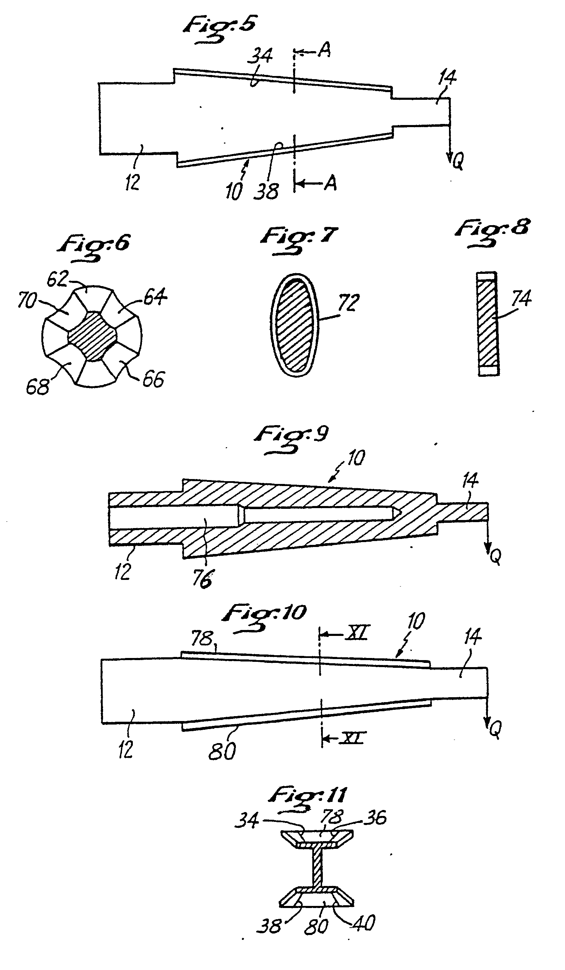

. les figures 6, 7 et 8 sont des vues en coupe suivant la ligne AA de la figure 5 et correspondant à différentes formes de section de la poutre;

. la figure 9 est une vue en coupe d'une poutre de flexion de forme tronconique présentant un alésage central;

. la figure 10 est une vue en élévation d'une poutre de flexion à section en I décroissante;

. la figure 11 est une vue en coupe prise suivant la ligne XI-XI de la figure 10,

. la figure 12 est une vue en élévation d'une poutre de flexion en forme de tronc de pyramide à base carrée;

. la figure 13 est une vue en coupe prise suivant la ligne XIII-XIII de la figure 12;

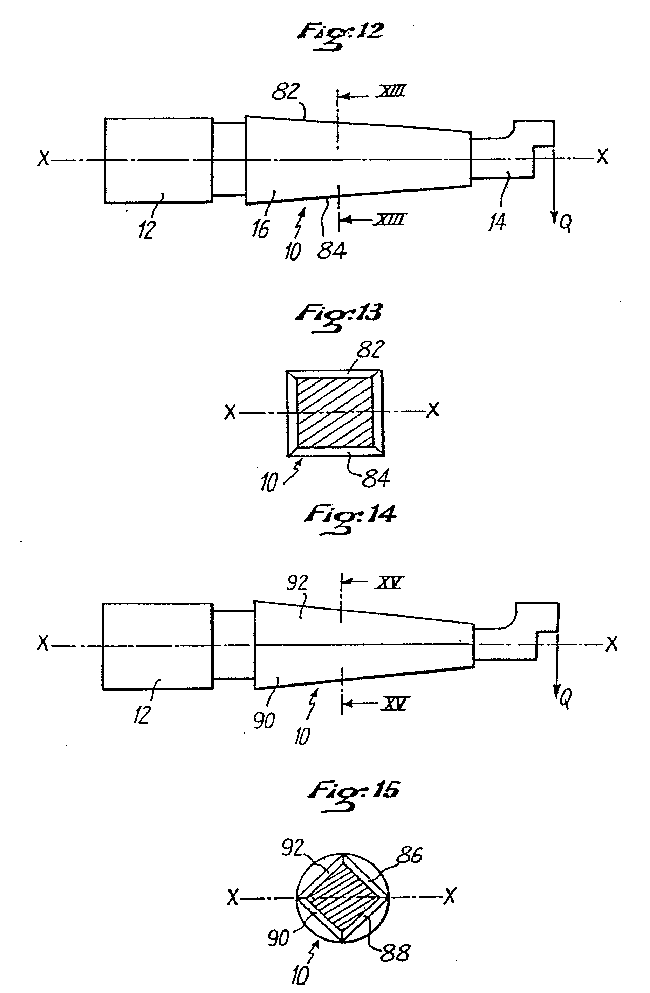

. la figure 14 est une vue en élévation d'une autre poutre de flexion en forme de tronc de pyramide à base carrée;

. la figure 15 est une vue en coupe prise suivant la ligne XV-XV de la figure 14;

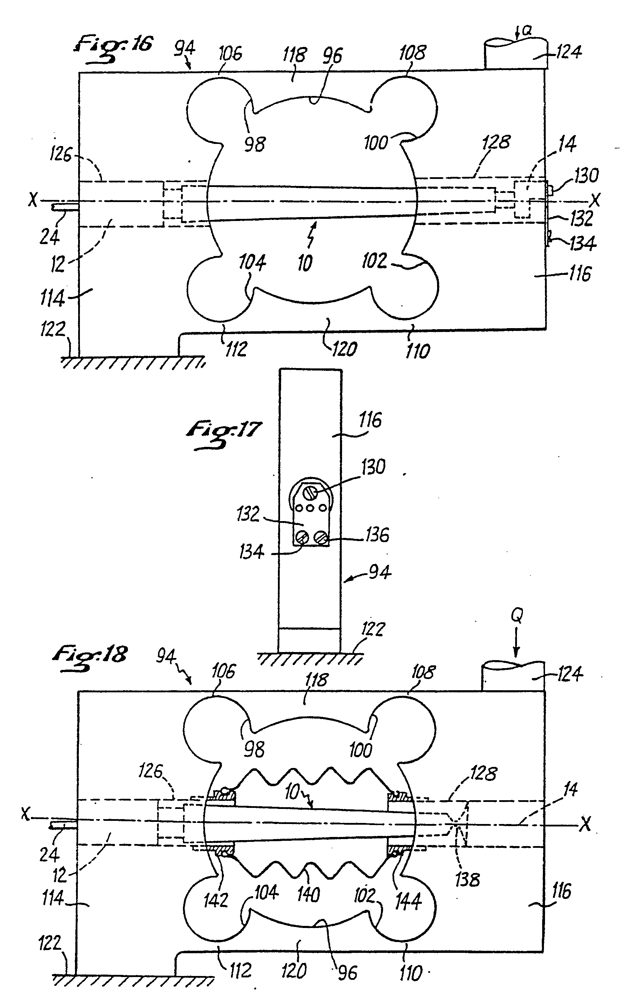

. la figure 16 est une vue en élévation d'un dynamomètre de l'invention associé à un récepteur de charge en forme de parallélogramme déformable;

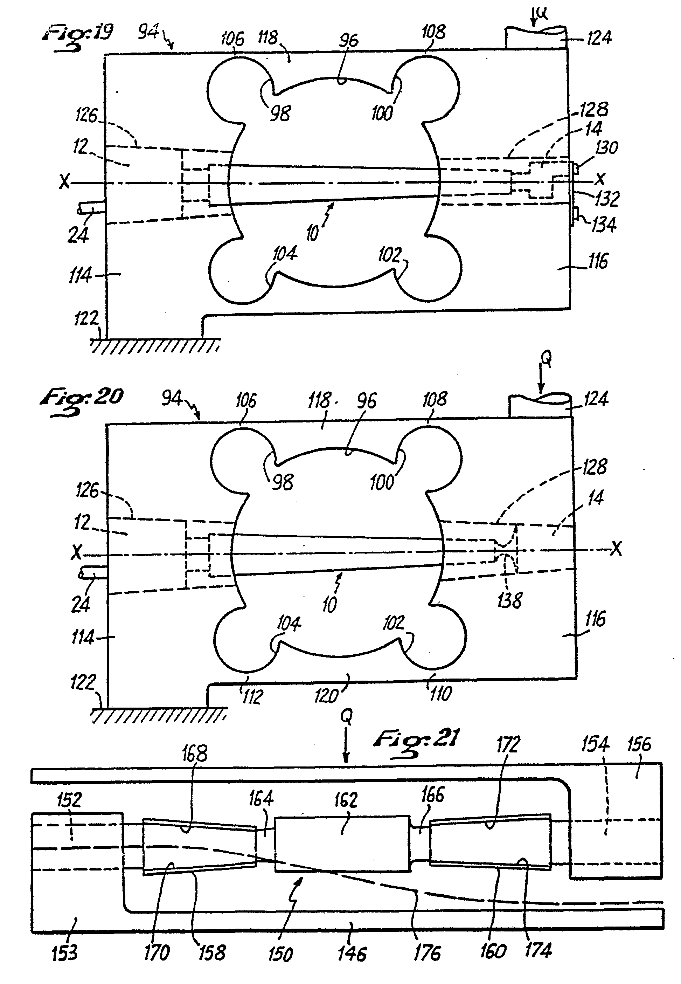

. la figure 17 est une vue de côté du dynamomètre de la figure 16;

. les figures 18 à 20 sont des vues en élévation d'un dynamomètre analogue à celui de la figure 16 montrant différents montages de l'extrémité encastrée de la poutre et de l'extrémité opposée de la poutre dans le parallélogramme déformable; et

. la figure 21 est une vue en élévation d'un dynamomètre dont la poutre de flexion comporte deux zones de flexion et est associée à un récepteur de charge, du type balance de comptoir ou pèse personne par exemple.

On a représenté sur les figures 1 et 2, un dynamomètre dont le corps d'épreuve est constitué par une poutre de flexion 10 qui présente une extrémité encastrée 12 et qui est déformable élastiquement en flexion sous l'effet d'une force Q appliquée à son extrémité opposée 14. La poutre 10 présente une zone de flexion 16, de forme tronconique, comprise entre deux parties 18 et 20, de section réduite, situées respectivement à proximité des extrémités 12 et 14.

L'extrémité encastrée 12 est cylindrique ou bien un prisme de section carrée qui comporte un passage traversant 22 débouchant à proximité de la partie 18 et destiné à l'introduction d'un câble électrique 24 pour l'alimentation des moyens sensibles, qui seront décrits plus loin. L'extrémité opposée 14 affecte généralement la forme d'un prisme droit pourvu d'un prolongement 26 dans lequel est pratiqué un trou borgne 28 fileté intérieurement. Ce trou borgne est destiné à fixer l'extrémité 14 à un support ou à un récepteur de charge, comme cela sera décrit plus loin.

La poutre 10 est réalisée en un matériau doué de propriétés élastique de préférence dans un alliage léger anodisable.

L'extrémité 12 étant encastrée dans un support approprié (non représenté), la zone de flexion 16 de la poutre 10 tend à s'infléchir sous l'action de la charge Q qui est appliquée à l'extrémité 14. On définit ainsi dans la zone de flexion un plan de fibres neutres XX qui passe par l'axe de la zone de flexion tronconique et qui est perpendiculaire à la direction de la charge Q. On définit également ainsi des fibres tendues qui se trouvent au dessus du plan de fibres neutres XX et des fibres comprimées qui se trouvent en dessous du plan de fibres neutres XX. Les fibres extrêmes 30 et 32 qui correspondent à deux génératrices opposées de la zone tronconique 16 disposées de part et d'autre du plan XX, subissent respectivement la tension maximum et la compression maximum.

Le dynamomètre représenté sur les figures 1 et 2 comporte en outre des moyens sensibles destinés à détecter la déformation en flexion de la poutre 10. Ces moyens comprennent d'une part deux séries d'enroulements 34 et 36 de fil de jauge pré-tendu ayant leurs brins principaux orientés sensiblement perpendiculairement à la force appliquée Q et demeurant en contact intime avec la poutre 10 dans la zone de flexion 16, les séries d'enroulements 34 et 36 ayant leurs brins principaux disposés suivant les fibres tendues de la poutre de flexion. Les moyens sensibles comportent d'autre part deux séries d'enroulements 38 et 40 de fil de jauge pré-tendu ayant leurs brins principaux orientés sensiblement perpendiculairement à la force appliquée Q et demeurant en contact intime avec la poutre 10 dans la zone de flexion 16, ces deux séries d'enroulements ayant leurs brins principaux disposés suivant les fibres comprimées de la poutre 10. Une des deux séries d'enroulements, à savoir la série d'enroulements 38 est visible en partie sur la figure 1.

Les séries d'enroulements précitées prennent appui sur des zones d'ancrage usinées dans la matière même de la poutre 10, et au voisinage respectivement de son extrémité encastrée 12 et de son extrémité opposée 14. Comme on peut le voir sur la figure 2, la série d'enroulements 34 prend appui sur deux zones d'ancrage constituées par deux épaulements 48 et 50 usinés dans la matière de la poutre 10, dans la zone de flexion 16, à proximité de l'extrémité encastrée 12 et de l'extrémité opposée 14.

De même la série d'enroulements 36 prend appui sur un ancrage 52 disposé à proximité de l'extrémité encastrée 22 et sur l'ancrage 50 précité. Les ancrages 48 et 52 sont situés à proximité immédiate et de part et d'autre de la génératrice 30 constituant la fibre extrème de la poutre de flexion 10. Les séries d'enroulements 34 et 36 peuvent comporter chacune soit un seul enroulement, soit plusieurs enroulements ce qui permet soit d'obtenir des résistances de pont élevées, soit de réduire la longueur fléchie de la poutre pour une résistance donnée, comme cela a déjà été indiqué plus haut.

Les deux séries d'enroulements, telles 38, qui sont disposées suivant les fibres tendues de la poutre de flexion 10 prennent appui respectivement sur deux ancrages tels 54 disposés à proximité immédiate de l'extrémité encastrée 12 et de part et d'autre de la génératrice 32 et sur un ancrage commun 56 disposé à proximité immédiate de l'extrémité opposée 14. Ces deux séries d'enroulements constituent les homologues des séries d'enroulements 34 et 36 mais sont disposées suivant les fibres comprimées de la poutre au lieu d'être disposées suivant les fibres tendues de la poutre.

Les quatre séries d'enroulements de fil de jauge pré-tendu précitées demeurant en contact intime avec la zone de flexion 16, sont bobinées en continu autour des ancrages précités et sont branchées dans un montage électrique en pont, du type pont de Wheatstone tel que représenté sur la figure 3. Ces quatre séries d'enroulements sont reliées à un bobinage 58 de compensation de sensibilité, disposées autour de la partie 18, l'alimentation électrique de l'ensemble se faisant au moyen du câble 24.

Les séries d'enroulements 34 et 36 constituent des brins comprimés 34 et 36 désignés par la lettre T sur la figure 3 et de même les deux autres séries d'enroulements 38 et 40 constituent des brins comprimés désignés par la lettre C sur la figure 3. Les brins T se trouvent dans des bras opposés du montage en pont, de même que les brins C.

Le montage en pont, tel que représenté sur la figure 3, constitue un montage classique. On rappellera que, en dehors de toute charge appliquée à la poutre de flexion 10, le pont de Wheatstone est équilibré c'est-à-dire que les résistances nominales des brins T et des brins C sont égales. Le montage de ces quatre séries d'enroulements de façon intercalée permet d'obtenir une sensibilité maximale lors de la mesure de la différence de potentiel $V_Q$-$V_N$ qui doit être nulle au repos. Sa valeur, mesurée par exemple au moyen de voltmètre de précision V, permet de mesurer les variations cumulées des résistances C et T dues aux élongations de flexion induites par la charge appliquée. En pratique, on peut imposer une différence de potentiel de 12 volts aux bornes N et P du pont et l'on mesure la tension $V_Q$-$V_N$ afin d'en déduire, par étalonnage préalable, la mesure de la force appliquée.

Les ancrages servant à la retenue des séries d'enroulements sont de préférence des épaulements circulaires usinées dans la matière même de la poutre, selon la technique déjà décrite dans EP-A- 0035942.

La figure 4 montre un usinage d'un tel épaulement circulaire au moyen d'un trépan 60 entraîné en rotation et permettant de réaliser un enlèvement annulaire de matière. Ce trépan est disposé suivant un angle α par rapport à la normale à la génératrice correspondante de la zone de flexion 16, de manière à former un bord de retenue pour la ou les séries d'enroulements prenant appui sur cet épaulement. Bien entendu, on pourra faciliter la retenue des séries d'enroulements sur les ancrages en disposant éventuellement de la colle, vernis ou produit similaire.

L'utilisation d'une zone de flexion de forme tronconique, telle que représentée sur les figures 1 et 2, a quatre avantages principaux:

Tout d'abord une telle forme se prête facilement à la mise en place des séries d'enroulements sur des zones d'ancrage usinées dans la matière même de la poutre de flexion.

En second lieu, le champ de contrainte est à peu près uniforme le long de chaque fil des séries d'enroulements.

En outre, une telle forme offre des zones de contrainte suffisamment exploitables étant donné que les fils de mesure, qui s'écartent nécessairement des fibres extrêmes 30 et 32, ont une amplitude de déformation qui est peu inférieure à celle de ces fibres puisqu'elle ne dépend que de leur distance au plan de fibres neutres.

Finalement il faut souligner également la grande facilité d'usinage d'une telle forme puisqu'elle peut être obtenue à partir d'une pièce tournée.

Il faut souligner en outre que le champ de contrainte le long des génératrices du tronc de cône varie assez peu sur les longueurs usuelles pour les fils de jauge, le maximum de contrainte pouvant se situer entre les deux extrémités et vers le milieu. Ceci constitue une caractéristique favorable pour la fidélité du dynamomètre, car il est toujours préférable que les ancrages du fil de jauge soient peu ou pas du tout sollicités par les contraintes.

Les proportions de la zone de flexion tronconique peuvent être déterminées par le calcul en fonction de la zone où l'on désire que la contrainte soit maximum.

Comme indiqué plus haut, la forme tronconique constitue la forme préférentielle de la zone de flexion de la poutre utilisée dans l'invention.

On décrira ci-après, en référence aux figures 5 à 15, d'autres formes de poutre de flexion pouvant être utilisées dans l'invention. Ces formes étant données uniquement à titre illustratif.

La figure 5 représente de façon générale une vue en élévation d'une poutre de flexion 10 à section décroissante depuis l'extrémité encastrée 12 jusqu'à l'extrémité opposée 14.

Comme le montre la figure 6, la zone de flexion 16 peut être une forme tronconique 62 pourvue de quatre fraisages à 45°, 64, 66, 68 et 70.

La figure 7 montre une poutre de flexion à section elliptique décroissante 72.

La figure 8 montre une poutre de flexion à section rectangulaire décroissante 74.

Les poutres de flexion selon les figures 5 à 8 peuvent recevoir deux séries d'enroulements telles 34 disposées suivant les fibres tendues de la poutre et deux séries d'enroulements telles 38 disposées suivant les fibres comprimées de la poutre de flexion.

La figure 9 montre une poutre de flexion à zone de flexion tronconique qui est pourvue d'un alésage axial 76, ce qui permet soit d'augmenter la sensibilité du capteur pour une forme extérieure donnée, soit d'agir sur sa sensibilité par abrasion à l'intérieur du trou, par exemple à la lime ronde, sans aucun risque pour les séries d'enroulements bobinées à l'extérieur de la poutre de flexion. Bien entendu, un tel alésage axial peut être réalisé dans d'autres formes de poutres, quelles soient à section décroissante ou à section constante.

Les figures 10 et 11 montrent un autre exemple d'une poutre de flexion, dont la zone de flexion présente une section décroissante. Dans cet exemple particulier, la section a la forme d'un I. Les deux ailes opposées, 78 et 80, de la poutre en I permettent la mise en place des quatre séries d'enroulements de fil de jauge pré-tendu. Ainsi, l'aile 78 reçoit les deux séries d'enroulements 34 et 36 dont les brins principaux constituent des brins tendus et l'aile 80 reçoit les deux séries d'enroulements 38 et 40 dont les brins principaux constituent les brins comprimés. Il y a lieu de noter que les poutres de flexion du type poutre en I, favorisent l'amplitude du signal du dynamomètre tout en présentant les mêmes possibilités que les autres formes précitées pour le bobinage des fils résistants. En outre une telle forme permet de réaliser une économie évidente de matériaux, l'âme du I étant suffisante pour résister à l'effort situé dans son plan.

Les figures 12 et 13 montrent une poutre de flexion 10 dont la zone de flexion 16 a la forme d'un tronc de pyramide à la base rectangulaire. Deux des côtés, à savoir les côtés 82 et 84, de la base sont orientés parallèlement au plan XX de fibres neutres de la poutre.

Les figures 14 et 15 montrent un autre exemple d'une poutre de flexion dont la zone de flexion présente une forme en tronc de pyramide. Ce tronc de pyramide présente une base carrée dont les côtés 86, 88, 90 et 92 sont orientés à 45° par rapport au plan de fibres neutres XX de la poutre. Cette poutre pourrait également présenter une base en forme de losange.

On a décrit précédemment des formes de zones de flexion à section décroissante, mais on peut également réaliser des zones de flexion à section constante, lesdites sections pouvant être comme précédemment des sections circulaires, ovales, carrées, en I, etc.

Les figures 16 et 17 illustrent le montage d'un dynamomètre à poutre de flexion 10 selon l'invention dans un récepteur de charge 94 à parallélogramme déformable, de type connu en soi.

Le récepteur de charge 94 présente une forme généralement parallélépipédique, réalisé en un matériau élastiquement déformable, cette forme étant pourvue d'un orifice circulaire 96 de grand diamètre et de quatre orifices circulaires 98, 100, 102 et 104, de petit diamètre, réalisés à la périphérie de la l'orifice 96. On réalise ainsi quatre charnières élastiques 106, 108, 110 et 112 aux quatre sommets d'un parallélogramme déformable. Ce parallélogramme déformable comporte deux bras opposés 114 et 116 et deux bras opposés 118 et 120. Le récepteur de charge 94 est fixé sur un socle 122 et reçoit en outre un support de plateau 124 destiné à recevoir une charge Q.

La poutre de flexion 10, dont la zone de flexion peut être par exemple tronconique, est montée de telle façon que son extrémité 12 soit encastrée dans le bras 114 du parallélogramme déformable et que son extrémité 14 soit reliée mécaniquement au bras opposé 116 du parallélogramme déformable. L'extrémité encastrée 12 est serrée mécaniquement, collée, soudée, ou vissée dans un orifice traversant 126 ménagé au travers du bras 114 du parallélogramme et l'extrémité opposée de la poutre de flexion passe dans un orifice 128, de dimension supérieure, ménagé dans le bras opposé 116. Comme le montre plus particulièrement la figure 17, l'extrémité 14 de la poutre de flexion 10 est fixée, au moyen d'une vis 130 introduite dans le trou borgne 28 (cf. figure 1) à une plaque élastique 132 qui est elle-même fixée par deux vis 134 et 136 au bras opposé 116 du parallélogramme déformable. On comprendra donc que, sous l'effet de la charge Q appliquée au plateau du récepteur de charge 94, le parallélogramme se déforme autour de ses quatre articulations et que la poutre 10 fléchit sous l'effet de la charge Q. La valeur de la charge est déterminée comme précédemment au moyen du montage en pont.

La figure 18 montre une réalisation sensiblement analogue à celle des figures 16 et 17, mais qui diffère principalement de celle -ci par le fait que l'extrémité opposée 14 est également encastrée dans l'orifice 128. La poutre 10 comporte alors un amincissement 138, disposé entre la zone de flexion 16 et l'extrémité opposée 14 et jouant le rôle d'articulation élastique. L'extrémité 14, peut être, de même que l'extrémité 12, serrée, collée, vissée ou soudée dans l'orifice 128.

Le dynamomètre représenté sur la figure 18 comporte en outre un soufflet de protection 140 entourant la zone de flexion 16 de la poutre 10. Le soufflet 140 est fixé à ses deux extrémités sur deux bagues 142 et 144 qui sont elles-mêmes vissées ou collées respectivement dans les orifices 126 et 128. Le soufflet 140 et les deux bagues 142 et 144 sont représentés en demi-coupe sur la figure 18.

La figure 19 illustre une autre variante qui s'apparente à celle des figures 16 et 17. Dans cette variante de réalisation, l'extrémité encastrée 12 présente une forme conique et est emmanchée dans un orifice 126 de forme conique correspondante. L'extrémité opposée 14 est reliée au bras 116 du parallélogramme déformable par une plaque élastique 132, de la même façon que sur les figures 16 et 17.

La figure 20 illustre une autre variante de montage dans laquelle les extrémités 12 et 14 sont toutes les deux tronconiques et emmanchées dans des orifices tronconiques correspondants 126 et 128. La poutre de flexion 10 comporte alors un amincissement 138, analogue à celui représenté sur la figure 18, disposé entre la zone de flexion 16 et l'extrémité opposée 14.

Il est bien entendu que les dynamomètres des figures 16 à 20 peuvent recevoir n'importe quelle poutre de flexion, à section décroissante ou constante, telle que citée précédemment. En outre, le soufflet 140 représenté sur la figure 18 peut être associé aussi bien aux dynamomètres des figures 16 et 17 qu'à ceux des figures 19 et 20.

Le montage du dynamomètre de l'invention dans un récepteur de charge à parallélogramme déformable permet de faire bénéficier le récepteur de charge du faible coût et de l'insensibilité au fluage de la poutre de flexion de l'invention. Le récepteur de charge lui-même peut être réalisé dans un métal doué de propriétés élastiques, mais différent du métal constitutif de la poutre de flexion.

La figure 21 montre un récepteur de charge, du type pèse-personne, comportant un socle 146, un plateau porte-charge 148 et une poutre de flexion 150 qui présente une extrémité 152 encastrée dans un prolongement vertical 153 du socle 146 et une extrémité opposée 154 encastrée dans un prolongement vertical 156 du plateau 148. La poutre de flexion 150 comporte deux zones de flexion 158 et 160, toutes deux de forme tronconique, et disposées en opposition. Les zones 158 et 160 sont séparées par une section cylindrique 162 et par deux sections réduites 164 et 166. Les zones de flexion 158 et 160 comportent des zones d'ancrage et reçoivent des séries d'enroulements de fil de jauge. Ainsi, la poutre 158 reçoit une série d'enroulements 168 dont les brins principaux sont disposés suivants les fibres tendues de la poutre et une série d'enroulements 170 dont les brins principaux sont disposés suivant les fibres comprimées de la poutre. De même la zone de flexion 160 reçoit une série d'enroulements 172 dont les brins principaux sont disposés suivant les fibres comprimé es de la poutre et une série d'enroulements 174 dont les brins principaux sont disposés suivant les fibres tendues de la poutre. Les séries d'enroulements 168, 170, 172 et 174 sont montées dans un montage électrique en pont analogue à celui représenté sur la figure 3. Les séries d'enroulements 168 et 174 forment deux bras opposés du pont tandis que les séries d'enroulements 170 et 172 forment les deux autres bras opposés du pont.

Sous l'effet de la charge Q appliquée sur le plateau 148, la poutre s'infléchit et se déforme comme représenté par la ligne en trait interrompu 176 qui illustre la déformée sous charge de la poutre de flexion. Les deux zones de flexion 158 et 160 de la poutre de flexion 160 peuvent être des zones à section décroissante ou à section constante, comme décrit plus haut.

L'invention n'est pas limitée au mode de réalisation particuliérement décrit et représenté et on peut imaginer d'autres variantes de réalisation sans sortir du cadre de l'invention.

Ainsi dans le cas où la poutre de flexion est montée dans un parallélogramme déformable, la poutre peut être disposée verticalement entre les deux bras horizontaux du parallélogramme, les deux autres bras du parallélogramme étant inclinés par rapport à la verticale.

Par ailleurs la liaison mécanique éventuellement utilisée pour relier l'extrémité opposée de la poutre à un bras du parallélogramme peut être non seulement une lame élastique, par exemple unelame en acier, mais aussi bien une liaison à biellette avec couteaux et pointeaux, ou encore un fil ou un câble.

Il sera préférable d'utiliser du fil de jauge émaillé, même si la poutre est réalisée en alliage anodisable.

Le dynamomètre de l'invention permet la réalisation d'une gamme variée de dynamomètres industriels et d'articles de balancerie, en particulier de pèse-personnes.

**Revendications:**

1. Dynamomètre du type comportant un corps d'épreuve (10) qui possède un axe longitudinal le long duquel se trouvent en série une première extrémité encastrée (12; 152), une zone centrale ( 16; 158,150,162) et une deuxième extrémité, (14, 154) dite l'extrémité opposée du corps d'épreuve (10), ledit corps d'épreuve étant deformable elastiquement sous l'effet d'une force appliquée à l'extrémité opposée, ainsi que des moyens sensibles (34, 36, 38,40; 168, 170, 172, 174) destinés à détecter la déformation du corps et constitués par quatre séries d'enroulements de fil de jauge prétendu, des zones d'ancrage (48, 50, 52, 54, 56) destinées à recevoir lesdites quatre séries d'enroulements étant définies dans la matière du corps d'épreuve (10), deux desdites séries d'enroulements (34, 36; 168, 174) ayant leurs brins principaux orientés sensiblement parallèlement à l'axe longitudinal du corps d'épreuve, lesdites quatre séries d'enroulements demeurant en contact intime avec le corps d'épreuve, formant un montage électrique en pont et étant connectées de façon que le pont se déséquilibre lorsque ladite force est appliquée sur le corps d'épreuve, caractérisé par le fait que

- le corps d'épreuve (10) constitue une poutre dont la zone centrale de la poutre (16; 158, 160, 162), comprend au moins une zone de flexion déformable élastiquement en flexion sous l'effet de la force orientée sensiblement perpendiculairement à l'axe longitudinal de la poutre,
- les deux autres séries d'enroulements (38, 40; 170,172) ont aussi leurs brins principaux orientés sensiblement parallèlement à l'axe longitudinal de la poutre, deux des séries d'enroulements (34, 36; 168, 174) ayant leurs brins principaux disposés suivant les fibres tendues de la poutre, tandis que les deux autres séries d'enroulements (38, 40; 170, 172) ont leurs brins principaux disposés suivant les fibres comprimées de la poutre,
- et par le fait que le dynamomètre comprend des moyens pour fixer respectivement l'extrémité encastrée (12) de la poutre et l'extrémité opposée (14) de la poutre à deux bras opposés (114, 116) d'un parallélogramme déformable à charnières élastiques formant récepteur de charge (94).

2. Dynamomètre selon la revendication 1, caractérisé par le fait que la zone de flexion (16) de la poutre présente une section décroissante depuis l'extrémité encastrée (12) jusqu'à l'extrémité opposée (14).

3. Dynamomètre selon la revendication 2, caractérisé par le fait que la zone de flexion (16) de la poutre présente une forme tronconique.

4. Dynamomètre selon la revendication 2, caractérisé par le fait que la zone de flexion (16) de la poutre présente une forme de tronc de pyramide.

5. Dynamomètre selon la revendication 4, caractérisé par le fait que le tronc de pyramide présente une base rectangulaire et que deux côtés opposés (82,84) de la base sont orientés parallélement au plan de fibres neutres (XX) de la poutre.

6. Dynamomètre selon la revendication 4, caractérisé par le fait que le tronc de pyramide présente une base carrée et que les côtés (86,88,90,92) de la base sont orientés à 45° par rapport au plan de fibres neutres de la poutre.

7. Dynamomètre selon la revendication 2, caractérisé par le fait que la zone de flexion (16) de la poutre présente une section en l.

8. Dynamomètre selon la revendication 1, caractérisé par le fait que la zone de flexion (16) de la poutre présente une section constante.

9. Dynamomètre selon l'une des revendications 1 à 8, caractérisé par le fait que la poutre de flexion (10) comporte un alésage axial (76).

10. Dynamomètre selon l'une des revendications 1 à 9, caractérisé par le fait que les zones d'ancrage sont des épaulements circulaires usinés dans la matière de la poutre.

11. Dynamomètre selon l'une des revendications 1 à 10, caractérisé par le fait que la poutre est réalisée dans un alliage léger anodisable.

12. Dynamomètre selon l'une des revendications 1 à 11, caractérisé par le fait que l'extrémité encastrée (12) de la poutre est encastrée dans un bras (114) du parallélogramme tandis que l'extrémité opposée (14) de la poutre est reliée par une liaison mécanique (132) au bras opposé (116) du parallélogramme.

13. Dynamomètre selon l'une des revendications 1 à 11, caractérisé par le fait que l'extrémité encastrée (12) et l'extrémité opposée (14) de la poutre sont encastrées respectivement dans deux bras opposés (114, 116) du parallélogramme et que la poutre comporte un amincissement (138), jouant le rôle d'articulation élastique, disposé entre la zone de flexion et l'extrémité opposée de la poutre.

14. Dynamomètre selon l'une des revendications 1 à 13, caractérisé par le fait que la zone centrale de la poutre de flexion (150) comporte deux zones de flexion (158, 160), chaque zone de flexion recevant une série d'enroulements (168; 174) dont les brins principaux sont disposés suivant les fibres tendues de la poutre et une série d'enroulements (170; 172) dont les brins principaux sont disposés suivant les fibres comprimées de la poutre.


**Patentansprüche**

1. Biegungsdynamometer mit einem Verformungskörper (10), entlang dessen Längsachse aneinander anschließend ein erstes eingespanntes Endstück (12, 152), eine Mittelzone (16, 158, 150, 162) und ein zweites am gegenüberliegenden Ende des Verformungskörpers gelegenes Endstück (14, 154) angeordnet sind, wobei der Verformungskörper unter der Einwirkung einer Kraft auf das zweite Endstück elastisch verformbar ist, und mit Sensoren (34, 36, 38, 40, 168, 170 172, 174) zur Erfassung der Verformung des Verformungskörpers, bestehend aus vier Serien von Drahtwicklungen aus Meßdraht und aus Ankerstellen (48, 50, 52, 54, 56) zur Aufnahme der vier Serien von Drahtwicklungen am Material des Biegekörpers, wobei zwei der Serien von Drahtwicklungen (34, 36, 168, 174) mit ihren Hauptlitzen im wesentlichen parallel zur Längsachse des Verformungskörpers orientiert sind und die vier Serien von Drahtwicklungen am Verformungskörper anliegen und in einer elektrischen Brückenschaltung derart miteinander verbunden sind, daß die Brücke aus dem Gleichgewicht gerät, sobald eine Kraft auf den Verformungskörper wirkt, dadurch gekennzeichnet, daß der Verformungskörper (10) als Balken ausgebildet ist, wobei die Mittelzone des Balkens (16; 158, 160, 162) aus wenigstens einer Biegezone besteht, die unter der Einwirkung einer im wesentlichen normal auf die Längsachse des Balkens wirkenden Kraft elastisch verbiegbar ist, daß auch die zwei übrigen Serien von Drahtwicklungen (38, 40; 170, 172) mit ihren Hauptlitzen im wesentlichen parallel zur Längsachse des Balkens orientiert sind, wobei die Hauptlitzen von zwei der Serien von Drahtwicklungen (34, 36; 168, 174) entlang den gedehnten Abschnitten des Balkens und die Hauptlitzen der anderen zwei Serien von Drahtwicklungen (38, 40; 170, 172) entlang den komprimierten Abschnitten des Balkens angeordnet sind, und daß das Dynamometer Anlenkstellen zur Festlegung des eingespannten Endstückes (12) und des gegenüberliegenden Endstückes (14) des Balkens an zwei gegenüberliegenden Armen (114, 116) einer über elastische Gelenke verformbaren und den Kraftaufnehmer (94) bildenden Parallelogrammanordnung aufweist.

2. Dynamometer nach Anspruch 1, dadurch gekennzeichnet, daß die Biegezone (16) des Balkens einen sich vom eingespannten Endstück (12) zum gegenüberliegenden Endstück (14) verjüngenden Querschnitt aufweist.

3. Dynamometer nach Anspruch 2, dadurch gekennzeichnet, daß die Biegezone (16) des Balkens als Kegelstumpf ausgebildet ist.

4. Dynamometer nach Anspruch 2, dadurch gekennzeichnet, daß die Biegezone (16) des Balkens als Pyramidenstumpf ausgebildet ist.

5. Dynamometer nach Anspruch 4, dadurch gekennzeichnet, daß der Pyramidenstumpf eine rechteckige Grundfläche aufweist und daß zwei einander gegenüberliegende Seitenkanten (82, 84) der Grundfläche parallel zur die unverformte Biegeachse (XX) des Balkens enthaltenden Ebene angeordnet sind.

6. Dynamometer nach Anspruch 4, dadurch gekennzeichnet, daß der Pyramidenstumpf eine quadratische Grundfläche aufweist und daß die Seitenkanten (86, 88, 90, 92) der Grundfläche mit der die unverformte Biegeachse des Balkens enthaltende Ebene einen Winkel von 45° einschließen.

7. Dynamometer nach Anspruch 2, dadurch gekennzeichnet, daß die Biegezone (16) des Balkens einen I-förmigen Querschnitt aufweist.

8. Dynamometer nach Anspruch I, dadurch gekennzeichent, daß die Biegezone (16) des Balkens einen konstanten Querschnitt aufweist.

9. Dynamometer nach einem der Ansprüche 1 bis 8, dadurch gekennzeichnet, daß der Biegebalken (10) eine axiale Bohrung (76) aufweist.

10. Dynamometer nach einem der Ansprüche 1 bis 9, dadurch gekennzeichnet, daß die Ankerstellen als in das Balkenmaterial eingearbeitete kreisförmige Abstützelemente ausgebildet sind.

11. Dynamometer nach einem der Ansprüche 1 bis 10, dadurch gekennzeichnet, daß der Balken aus einer anodisierbaren Leichtlegierung bzw. Leichtmetallegierung besteht.

12. Dynamometer nach einem der Ansprüche 1 bis 11, dadurch gekennzeichnet, daß das eingespannte Endstück (12) des Balkens in einem Arm (114) der Parallelogrammanordnung eingespannt ist und daß das gegenüberliegende Endstück (14) des Balkens über eine mechanische Verbindung (132) am gegenüberliegenden Arm (116) der Parallelogrammanordnung angedeutet ist.

13. Dynamometer nach einem der Ansprüche 1 bis 11, dadurch gekennzeichnet, daß das eingespannte Endstück (12) und das gegenüberliegende Endstück (14) des Balkens an zwei einander gegenüberliegenden Armen (114, 116) der Parallelogrammanordnung eingespannt sind und daß der Balken eine Verjüngung (138) aufweist, die das elastische Gelenk bildet und zwischen der Biegezone und dem Endstück (14) des Balkens angeordnet ist.

14. Dynamometer nach einem der Ansprüche 1 bis 13, dadurch gekennzeichnet, daß die Mittelzone des Biegebalkens (150) zwei Biegezonen (158, 160) aufweist und daß jede Biegezone eine Serie von Drahtwicklungen (168; 174), deren Hauptlitzen entlang den gedehnten Abschnitten des Balkens angeordnet sind, und eine Serie von Drahtwicklungen (170; 172), deren Hauptlitzen entlang den komprimierten Abschnitten des balkens angeordnet sind, aufweist.

## Claims

1. Dynamometer of the type comprising a strain body (10) which has a longitudinal axis arranged along which in series is a first embedded end (12; 152), a central area (16; 158, 150, 162) and a second end (14, 154) referred to as the opposite end of the strainbody (10) the said strain body being elastically deformable under the effect of a force applied to the opposite end, as well as sensitive means (34, 36, 38, 40; 168, 170, 172, 174) intended to detect the deformation of the body and constituted by four series of windings ofprestressed gauge wire, anchoring areas (48, 50, 52, 54, 56) intended to receive the said four series of windings being defined in the material of the strain body (10), two of the said series of windings (34, 36; 168, 174) having their main strands directed substantially parallel to the longitudinal axis of the strain body, the said four series of windings remaining in close contact with the strain body forming an electrical bridge connection and being connected so that the bridge is out of balance when the said force is applied to the strain bodycharacterised by the fact that

- the strain body (10) constitutes a beam whereof the central area of the beam (16; 158, 160, 162) comprises at least one elastically deformable bending area bending under the effect of the force directed substantially perpendicularly to the longitudinal axis of the beam,

- the two other series of windings (38, 40; 170, 172) also have their main strands directed substantially parallel to the longitudinal axis of the beam, two of the series of windings (34, 36; 168, 174) having their main strands arranged along tensioned fibres of the beam, whereas the two other series of windings (38, 40; 170, 172) have their main strands arranged along the compressed fibres of the beam,

- and by the fact that the dynamometer comprises means for fixing respectively the embedded end (12) of the beam and the opposite end (14) of the beam to two opposed arms (114, 116) of a deformable parallelogram comprising resilient hinges forming load-receiving means (94).

2. Dynamometer according to Claim 1, characterised by the fact that the bending area (16) of the beam has a decreasing section from the embedded end (12) as far as the opposite end (14).

3. Dynamometer according to Claim 2, characterised by the fact that the bending area (16) of the beam has a frustoconical shape.

4. Dynamometer according to Claim 2, characterised by the fact that the bending area (16) of the beam has the shape of a truncated pyramid.

5. Dynamometer according to Claim 4, characterised by the fact that the truncated pyramid has a rectangular base and that two opposite sides (82, 84) of the base are directed parallel to the plane of neutral fibres (XX) of the beam.

6. Dynamometer according to Claim 4, characterised by the fact that the truncated pyramid has a square base and that the sides (86, 88, 90, 92) of the base are directed at 45° with respect to the plane of neutral fibres of the beam.

7. Dynamometer according to Claim 2, characterised by the fact that the bending area (16) of the beam has an I section.

8. Dynamometer according to Claim 1, characterised by the fact that the bending area (16) of the beam has a constant section.

9. Dynamometer according to one of Claims 1 to 8, characterised by the fact that the bending beam (10) comprises an axial bore (76).

10. Dynamometer according to one of Claims 1 to 9, characterised by the fact that the anchoring areas are circular shoulders machined in the material of the beam.

11. Dynamometer according to one of Claims 1 to 10, characterised by the fact that the beam is made from a light anodisable alloy.

12. Dynamometer according to one of Claims 1 to 11, characterised by the fact that the embedded end (12) of the beam is embedded in an arm (114) of the parallelogram, whereas the opposite end (14) of the beam is connected by a mechanical connection (132) to the opposite arm (116) of the parallelogram.

13. Dynamometer according to one of Claims 1 to 11, characterised by the fact that the embedded end (12) and the opposite end (14) of the beam are embedded respectively in two opposite arms (114, 116) of the parallelogram and that the beam comprises a thin portion (138), fulfilling the function of a resilient articulation,

**0 088 688**

arranged between the bending area and the opposite end of the beam.

14. Dynamometer according to one of Claims 1 to 13, characterised by the fact that the central area of the bending beam (150) comprises two bending areas (158, 160), each bending area receiving a series of windings (168; 174) whereof the main strands are arranged along the tensioned fibres of the beam and a series of windings (170, 172) whereof the main strands are arranged along the compressed fibres of the beam.

Fig.1

Fig.2

Fig.3

Fig.4

Fig:5

34

A

14

12

10  38

A

Q

Fig:6

62
70
64
68  66

Fig:7

72

Fig:8

74

Fig:9

10

14

12

76

Q

Fig:10

78

XI

10

14

12  80

XI

Q

Fig:11

34  78  36

38  80  40

*Fig.12*

*Fig.13*

*Fig.14*

*Fig.15*

Fig:16

Fig:17

Fig:18

0 088 688

Fig.19

Fig.20

Fig.21

9